# EUROPÄISCHE PATENTSCHRIFT

(11) **EP 0 964 190 B1**
(45) Veröffentlichungstag und Bekanntmachung des Hinweises auf die Patenterteilung: **25.08.2004**
(21) Anmeldenummer: 99110224.5
(22) Anmeldetag: 26.05.1999
(51) Int. Cl.: F16J 15/32, F16J 15/56

(54) **Abstreifvorrichtung**
Scraping device
Dispositif racleur

(30) Priorität: 09.06.1998 DE 29810274 U
(43) Veröffentlichungstag der Anmeldung: 15.12.1999
(73) Patentinhaber: Festo AG & Co, 73734 Esslingen (DE)
(72) Erfinder: Stoll, Kurt, Dr., 73732 Esslingen (DE); Köngeter, Herbert, 73262 Reichenbach (DE)
(74) Vertreter: Abel, Martin, Dipl.-Ing.

(56) Entgegenhaltungen:
- DE-U- 1 910 340
- US-A- 4 819 854
- US-A- 5 165 700
- US-A- 5 603 509

## Beschreibung

Die Erfindung betrifft eine Abstreifvorrichtung, mit einem einstückigen Abstreifring, der in seiner Gebrauchsstellung mit einer an ihm vorgesehenen Befestigungseinrichtung in einer im Innern einer Durchbrechung einer Halterung vorgesehenen, nach radial innen offenen Ringnut festgelegt ist und dabei ein bezüglich ihm und der Halterung axial bewegbares, die Durchbrechung durchsetzendes stangenförmiges Bauteil mit einer Abstreiflippe unter Berührkontakt umschließt, wobei die Befestigungseinrichtung eine Mehrzahl von in Umfangsrichtung des Abstreifringes verteilt angeordneten, axial in einer Montagerichtung von einer ringförmigen Tragpartie des Abstreifringes wegragenden Befestigungsarmen enthält, die jeweils mindestens einen radial nach außen ragenden Befestigungsvorsprung aufweisen und radial federelastisch verformbar sind, so dass der Abstreifring durch in Montagerichtung erfolgendes Eindrücken in die Durchbrechung im Rahmen einer Rastverbindung an der Halterung festlegbar ist, wobei die Befestigungsvorsprünge der Befestigungsarme in die Ringnut einrasten.

Eine derartige Abstreifvorrichtung geht aus der DE-U-1910340 hervor. Sie enthält einen als integrales Bauteil ausgeführten Abstreifring, der mit Hilfe einer ringförmigen Befestigungseinrichtung in einer Ringnut im Innern der Durchbrechung einer Halterung festgelegt werden kann. Das Haupteinsatzgebiet der Abstreifvorrichtung sind fluidbetätigte Arbeitszylinder, wobei die Halterung vom Gehäuse und das stangenförmige Bauteil von der Kolbenstange gebildet ist. Der Abstreifring hat hier die Funktion, bei Einfahrhub der Kolbenstange an dieser anhaftenden Schmutz und Staub abzustreifen, um die dem Abstreifer regelmäßig nachgeschaltete Dichtung vor raschem Verschleiß zu schützen.

Bei der bekannten Abstreifvorrichtung ist bereits der Vorteil gegeben, dass der Abstreifring ohne zusätzliches Sicherungselement an der Halterung fixiert werden kann. Hierzu enthält die Befestigungseinrichtung eine Mehrzahl von Befestigungsarmen, die bei der Montage im Sinne einer Durchmesserverringerung zusammengedrückt werden, bis sie in einer Ringnut der zugeordneten Halterung einrasten.

Bei einer aus der DE 44 08 408 C1 bekannten Abstreifvorrichtung ist die Befestigungseinrichtung von einem einstückig angeformten und an einer Stelle seines Umfanges unterbrochenen Sicherungsring gebildet, der sich mit Hilfe eines geeigneten Zangenwerkzeuges zusammendrücken lässt. Trotz des im Vergleich zu einen separaten Sicherungsring aufweisenden konventionellen Abstreifvorrichtungen erheblich einfacheren Aufbaus ergeben sich bei dieser Abstreifvorrichtung noch Unzulänglichkeiten, wenn die Montage in einer Durchbrechung mit kleinem Durchmesser vorgenommen werden soll. Hier bereitet es Probleme, das zur Verringerung des Durchmessers des Sicherungsringes erforderliche Spezialwerkzeug anzusetzen und in die Durchbrechung einzuführen.

Es ist die Aufgabe der vorliegenden Erfindung, eine Abstreifvorrichtung der eingangs genannten Art zu schaffen, die unter Beibehaltung eines kostengünstigen Aufbaus einfach montiert werden kann.

Zur Lösung dieser Aufgabe ist vorgesehen, dass der Abstreifring eine nach Art eines Bundes radial nach außen vorspringende ringförmige Blende aufweist, die in Gebrauchsstellung des Abstreifringes außerhalb der Durchbrechung an einer sich an diese anschließenden Stirnfläche der Halterung anliegt.

Auf diese Weise lässt sich der Abstreifring weiterhin sehr einfach an der Halterung montieren, indem er mit den Befestigungsarmen voraus (Montagerichtung) axial in die Durchbrechung eingedrückt wird, bis die Befestigungsvorsprünge in die Ringnut im Innern der Durchbrechung einrasten. Auf ein spezielles Montagewerkzeug kann dabei verzichtet werden und es ist vor allem auch dann eine sehr einfache Montage möglich, wenn das stangenförmige Bauteil die Durchbrechung bereits durchsetzt. Auf diese Weise ist ein jederzeitiger verschleißbedingter Austausch des Abstreifringes möglich, ohne die Einheit aus Halterung und stangenförmigem Bauteil vorher zerlegen zu müssen. Die Demontage des Abstreifringes läßt sich ebenfalls ohne Spezialwerkzeug beispielsweise dadurch vornehmen, dass ein handelsüblicher Schraubenzieher radial zwischen die Umfangswand der Durchbrechung und dem Abstreifring eingeführt und der Abstreifring herausgehebelt wird. Die Blende kann insbesondere dazu dienen, ein Eindringen von Verunreinigungen in den axial innerhalb des Abstreifringes liegenden Bereich der Durchbrechung zu verhindern.

Vorteilhafte Weiterbildungen der Erfindung gehen aus den Unteransprüchen hervor.

Zweckmäßigerweise bildet die Blende gleichzeitig die Tragpartie für die Befestigungsarme.

Um besonders kompakte Abmessungen zu erhalten, ist es von Vorteil, wenn die insgesamt ringähnlich strukturierte Anordnung von Befestigungsarmen die Abstreiflippe radial außen konzentrisch umschließt. Es ergibt sich somit eine wenigstens teilweise axiale Überlappung mit daraus resultierenden geringen Axialabmessungen.

Ein besonderer Vorteil der erfindungsgemäßen Abstreifeinrichtung besteht darin, dass sie sich problemlos in einer Weise gestalten läßt, die eine Montage in vorhandenen Halterungen ermöglicht, in denen bisher konventionelle Abstreifvorrichtungen montiert worden waren. Auf diese Weise ist eine problemlose Umrüstung bestehender Produkte, beispielsweise Arbeitszylinder, möglich.

Obgleich es prinzipiell möglich wäre, den Abstreifring aus Metall herzustellen, bietet sich wegen der kostengünstigeren Fertigungsmöglichkeiten eine Kunststoffausführung an. Vorzuziehen ist ein Abstreifring aus verhältnismäßig hartem und verschleißarmem Kunststoffmaterial wie sogenanntes POM oder ein sonstiges Polymer. Denkbar wäre auch eine Realisierung als Mehrstoffbauteil, insbesondere ein Zweistoff-Bauteil, bei dem die Materialwahl der jeweiligen Funktion entsprechend individuell erfolgen kann. Dabei könnten beispielsweise die Befestigungsarme aus verhältnismäßig flexiblem Material bestehen, um den Montage- und Demontagevorgang zu erleichtern, während bei der Abstreiflippe insbesondere für deren eigentliche Abstreifpartie ein sehr hartes und verschleißfestes Material zum Einsatz gelangt. Bei Bedarf kann auch noch zu Dichtzwecken dienendes weicheres Kunststoffmaterial am Abstreifring angeformt sein.

Nachfolgend wird die Erfindung anhand der beiliegenden Zeichnung näher erläutert. In dieser zeigen:
- Figur 1: eine bevorzugte Bauform der erfindungsgemäßen Abstreifvorrichtung in ihrer Gebrauchsstellung an einem Arbeitszylinder montiert, das Ganze im Längsschnitt entlang einer sich axial und radial erstreckenden Schnittebene gemäß Schnittlinie I-I aus Figur 2, und
- Figur 2: den bei der Abstreifvorrichtung gemäß Figur 1 verwendeten Abstreifring in Einzeldarstellung mit Blick gemäß Pfeil II auf seine Rückseite.

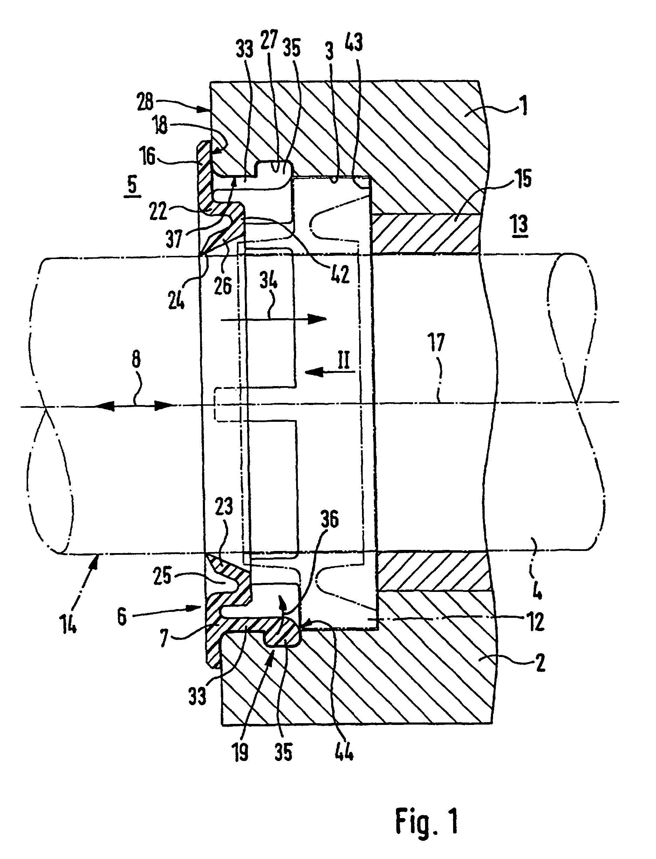

Die Figur 1 zeigt den stirnseitigen Endabschnitt des Gehäuses 1 eines fluidbetätigten Arbeitszylinders, in dem sich ein nicht näher dargestellter Kolben befindet, der durch Fluidbeaufschlagung zu einer Axialbewegung veranlaßt werden kann.

Das Gehäuse 1 ist an beiden Stirnseiten durch eine Abschlußwand 2 abgeschlossen, von denen wenigstens eine über eine axial durchgehende Durchbrechung 3 verfügt. Diese Durchbrechung 3 wird von einer mit dem Kolben fest verbundenen Kolbenstange 4 durchsetzt, die in der Zeichnung strichpunktiert angedeutet ist. An dem im Außenbereich 5 des Gehäuses 1 befindlichen Endabschnitt der Kolbenstange 4 läßt sich die vom Kolben erzeugte Axialbewegung in geeigneter Weise abgreifen.

In der Durchbrechung 3 ist unter Einnahme ihrer Gebrauchsstellung eine ringförmige Abstreifvorrichtung 6 lösbar fixiert. Sie umfaßt insbesondere einen Abstreifring 7, der am Gehäuse 1 festgelegt ist und die Kolbenstange 4 koaxial umschließt. Im Betrieb des Arbeitszylinders führt die Kolbenstange 4 eine durch Doppelpfeil angedeutete hin und her gehende Axialbewegung 8 relativ zum Gehäuse 1 und dem daran befestigten Abstreifring 7 aus.

Ein weiterer Bestandteil der Abstreifvorrichtung 7 ist beim Ausführungsbeispiel von einem Dichtring 12 gebildet, der axial innerhalb des Abstreifringes 7 in der Durchbrechung 3 plaziert ist.

Während die Hauptaufgabe des Dichtringes 12 darin besteht, einen Austritt von fluidischem Druckmedium aus dem Innenraum 13 des Gehäuses 1 durch die Durchbrechung 3 hindurch zu verhindern, hat der Abstreifring 7 den Zweck, am Außenumfang 14 der Kolbenstange 4 anhaftende Verunreinigungen während des Einfahrhubes der Kolbenstange 4 abzustreifen und am Eintritt in den Dichtring 12 und eventuell auch den Innenraum 13 zu verhindern. Die Abstreiffunktion ist besonders wichtig bei Einsätzen des Arbeitszylinders in verschmutzungsreicher Umgebung.

Prinzipiell läßt sich die Abstreifvorrichtung 7 nicht nur im Zusammenhang mit Arbeitszylindern einsetzen. Anstelle des Gehäuses 1 kann auch eine andere Halterung treten, wie auch die Kolbenstange 4 von einem anderen stangenförmigen Bauteil gebildet sein kann. Die Bezugnahmen auf das Gehäuse 1 und die Kolbenstange 4 in vorliegender Beschreibung sind daher allgemein als Bezugnahmen auf eine Halterung und auf ein stangenförmiges Bauteil beliebiger Art zu verstehen.

Bei dem gezeigten Ausführungsbeispiel sind der Abstreifring 7 und der nur strichpunktiert angedeutete Dichtring 12 als axial aufeinanderfolgend montierte, separate Bauteile ausgeführt. Desweiteren findet sich im Innern der Durchbrechung 3 auf der dem Abstreifring 7 axial entgegengesetzten Seite des Dichtringes 12 noch eine gehäusefeste Führungshülse 15, die die Kolbenstange 4 umschließt und bei ihrer Axialbewegung seitlich abstützt und führt. Der Abstreifring 7 ist ein einstückiges Bauteil, das zweckmäßigerweise aus Kunststoffmaterial besteht und sich auf kostengünstige Weise durch Spritzgießen herstellen läßt. Es besteht aus verschleißfestem Hartkunststoff, beispielsweise POM oder ein sonstiges geeignetes Polymer.

Im einzelnen umfaßt der Abstreifring 7 eine ringscheibenähnliche Tragpartie 16, deren Scheibenebene rechtwinkelig zur Längsachse 17 des Abstreifringes 7 verläuft. In der gezeigten Gebrauchssstellung entspricht diese Längsachse 17 gleichzeitig derjenigen der Kolbenstange 4.

An der einen axial gerichteten Fläche der Tragpartie 16, nachfolgend als axiale Innenfläche 18 bezeichnet, ist eine Befestigungseinrichtung 19 einstückig angeformt, die zur gehäusefesten Fixierung des Abstreifringes 7 dient.

An den radialen Innenbereich 22 der Tragpartie 16 ist eine Abstreiflippe 23 angeformt, die die Kolbenstange 4 konzentrisch umschließt und mit einer an ihrem freien Ende vorgesehenen ringförmigen Abstreifpartie 24 unter Berührkontakt an der Kolbenstange 4 anliegt.

Bevorzugt hat die Abstreiflippe 23 einen aus Figur 1 ersichtlichen U- oder V-ähnlichen Querschnitt, wobei die Öffnung 25 des U bzw. V in Gebrauchsstellung axial nach außen weist. Das freie Ende des einen U- bzw. V-Schenkels ist an die Tragpartie 16 angeformt, das freie Ende des anderen Schenkels bildet die Abstreifpartie 24. Der die Abstreifpartie 24 aufweisende Lippenabschnitt 26 ist zweckmäßigerweise konisch geformt, so daß er sich zur Abstreifpartie 24 und gleichzeitig zum Außenbereich 5 hin verjüngt. In Verbindung mit einer scharfkantigen Abstreifpartie 24 resultiert daraus eine sehr gute Abstreifwirkung.

Durch den U- bzw. V-ähnlichen Querschnitt der Abstreiflippe 23 wird außerdem eine gewisse Quernachgiebigkeit erhalten, was dazu führt, daß die Abstreifpartie 24 mit Vorspannung am Außenumfang 14 der Kolbenstange 4 anliegt und daß gleichzeitig toleranzbedingte Lageabweichungen der Kolbenstange 4 bezüglich dem Gehäuse 1 selbsttätig kompensiert werden.

Die gehäuseseitige Befestigung des Abstreifringes 7 erfolgt im Rahmen einer Rastverbindung unter Mitwirkung einer am Innenumfang der Durchbrechung 3 vorgesehenen, nach radial innen hin offenen Ringnut 27. Diese Ringnut 27 ist zu der sich außen an die Durchbrechung 3 anschließenden und quer zur Längsachse 17 verlaufenden Stirnfläche 28 des Gehäuses 1 axial beabstandet.

Um die Rastverbindung zu ermöglichen, besteht die Befestigungseinrichtung 19 aus einer Mehrzahl von in Umfangsrichtung 32 des Abstreifringes 7 mit Abstand verteilt zueinander angeordneten Befestigungsarmen 33, die von der sie tragenden Tragpartie 16 axial nach innen in die Durchbrechung 3 hinein axial wegragen. Die Richtung des Wegragens entspricht gleichzeitig der durch einen Pfeil markierten Montagerichtung 34, in der der Abstreifring 7 bei der Montage am Gehäuse 1 in die Durchbrechung 3 hineingedrückt wird.

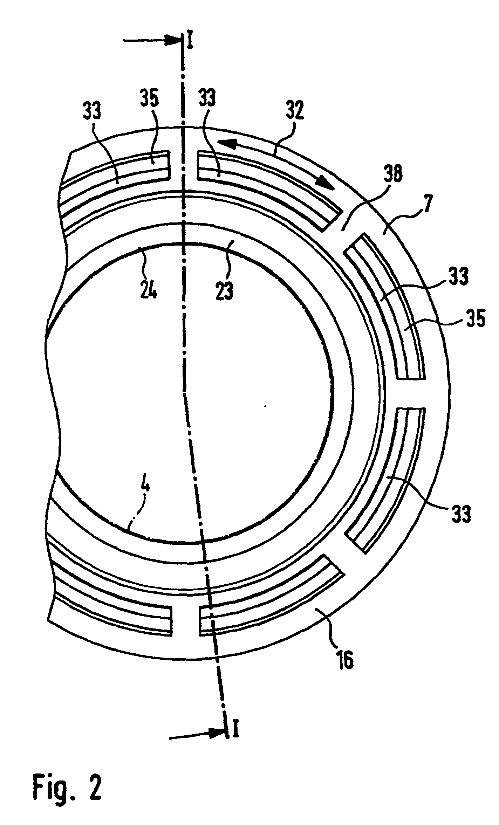

Die Befestigungsarme 33 haben zweckmäßigerweise jeweils eine mit der Umfangsrichtung 32 des Abstreifringes 7 zusammenfallende bogenförmige Erstreckung wie dies aus Figur 2 ersichtlich ist.

Jeder Befestigungsarm 33 ist radial federelastisch verformbar und trägt, insbesondere an seinem der Tragpartie 16 entgegengesetzten Ende, einen nach radial außen ragenden Befestigungsvorsprung 35. Dessen Querschnitt ist komplementär zum Querschnitt der Ringnut 27 ausgeführt und sein Abstand von der Tragpartie 16 entspricht demjenigen des Abstandes der Ringnut 27 von der Stirnfläche 28 des Gehäuses 1.

Die Befestigungsarme 33 sind so ausgebildet und angeordnet, daß sie unter radialer Vorspannung in die Ringnut 27 eingreifen, wenn der Abstreifring 7 in Montagerichtung 34 soweit in die Durchbrechung 3 hineingedrückt ist, bis er mit der axialen Innenfläche 18 seiner Tragpartie 16 an der äußeren Stirnfläche 28 des Gehäuses 1 anliegt. Aufgrund ihrer Federelastizität ist es den Befestigungsarmen 33 beim Montagevorgang möglich, vorübergehend gemäß Pfeil 36 radial nach innen zu schwenken, bis die Befestigungsvorsprünge 35 den zwischen der Stirnfläche 28 und der Ringnut 27 liegenden Außenabschnitt 37 der Durchbrechung 3 passiert haben. Der Abstreifring 7 läßt sich also sehr einfach dadurch montieren, daß er mit seinen Befestigungsarmen 33 voraus in Montagerichtung 34 in die Durchbrechung 3 eingedrückt wird, bis die Befestigungsvorsprünge 35 in die Ringnut 27 einrasten.

In dieser Gebrauchsstellung fungiert die nach Art eines Bundes radial nach außen vorspringende Tragpartie 16 als eine Art Blende, die den radialen Zwischenraum zwischen der Abstreiflippe 23 und dem Innenumfang der Durchbrechung 3 überbrückt und abdeckt, so daß ein Eindringen von Verunreinigungen in die Durchbrechung verhindert wird.

Um den Abstreifring 7 zu demontieren, genügt es, beispielsweise mit einem Schraubenzieher in den Bereich zwischen der Stirnfläche 28 und der Tragpartie 16 einzudringen und den Abstreifring 7 herauszuhebeln. Dabei kann mit dem Werkzeug bei Bedarf in einen der Zwischenräume 38 zwischen den Befestigungsarmen 33 eingegriffen oder auch Druck von außen auf einen der Befestigungsarme 33 zum Zwecke seines Nach-innen-Umbiegens ausgeübt werden.

Der Abstreifring 7 hat besonders kompakte axiale Abmessungen, da sich die ringartige Struktur von Befestigungsarmen 33 und die Abstreiflippe 23 axial überlappen. So ragt die Abstreiflippe 23 beim Ausführungsbeispiel mit dem Verbindungsbereich 42 der beiden U- bzw. V-Schenkel bezogen auf die Tragpartie 16 in die gleiche Axialrichtung wie die Befestigungsarme 33 und kommt in der Gebrauchsstellung etwa auf Höhe des Außenabschnittes 37 der Durchbrechung 3 zu liegen. Indem ein radialer Abstand zwischen der Abstreiflippe 23 und den Befestigungsarmen 33 gewahrt bleibt, wird durch diese Überlappung das Biege- bzw. Verformungsverhalten der Befestigungsarme 33 nicht beeinträchtigt.

Der Abstreifring 7 hat beim Ausführungsbeispiel eine Doppelfunktion. Neben seiner eigentlichen Funktion als Abstreifer hat er auch noch die Funktion einer Halteeinrichtung in Bezug auf den Dichtring 12. Der Dichtring 12 ist bis zum Anschlag an einem Absatz 43 in die Durchbrechung 3 eingesteckt und wird bei montiertem Abstreifring 7 zwischen dem Absatz 43 und dem in Montagerichtung 34 weisenden freien Ende 44 der Befestigungsarme 33 axial fixiert.

Im Vergleich zum Abstreifring 7 besteht der Dichtring 12 aus weicherem Material mit guten Dichteigenschaften. Er dichtet sowohl dynamisch zur Kolbenstange 4 hin als auch statisch zum Innenumfang der Durchbrechung 3 und verhindert somit ein Austreten von Druckmedium aus dem Innenraum 13 durch die Durchbrechung 3 hindurch in den Außenbereich 5 außerhalb des Gehäuses 1.

Anstelle der beim Ausführungsbeispiel gezeigten separaten Ausgestaltung des Abstreifringes 7 und des Dichtringes 12 wäre es auch denkbar, den Dichtring 12 als einstückigen Bestandteil des Abstreifringe 7 auszuführen und letzteren als Mehrstoffkörper auszubilden, der einstückig aus unterschiedlichen, aneinander angespritzten Materialien besteht.

Ein großer Vorteil des Abstreifringes 7 besteht darin, daß er sich ohne Sonderwerkzeuge montieren und demontieren läßt. Dabei erübrigt sich vorteilhafterweise auch ein Zerlegen des Arbeitszylinders. Zur Montage genügt es, den Abstreifring 7 auf die Kolbenstange 4 aufzusetzen, auf dieser bis zum Erreichen der Durchbrechung 3 zu verschieben und anschließend durch etwas erhöhte Druckkraft in die Durchbrechung 3 bis zum Erhalt der Rastverbindung einzudrücken. Da der Abstreifring 7 als Halteeinrichtung für den Dichtring 12 fungiert, läßt sich bei entnommenem Abstreifring 7 auch problemlos der nur eingesteckte Dichtring 12 austauschen.

## Patentansprüche

1. Abstreifvorrichtung, mit einem einstückigen Abstreifring (7), der in seiner Gebrauchsstellung mit einer an ihm vorgesehenen Befestigungseinrichtung (19) in einer im Innern einer Durchbrechung (3) einer Halterung (1) vorgesehenen, nach radial innen offenen Ringnut (27) festgelegt ist und dabei ein bezüglich ihm und der Halterung axial bewegbares, die Durchbrechung (3) durchsetzendes stangenförmiges Bauteil (4) mit einer Abstreiflippe (23) unter Berührkontakt umschließt, wobei die Befestigungseinrichtung (19) eine Mehrzahl von in Umfangsrichtung (32) des Abstreifringes (7) verteilt angeordneten, axial in einer Montagerichtung (34) von einer ringförmigen Tragpartie (16) des Abstreifringes (7) wegragenden Befestigungsarmen (33) enthält, die jeweils mindestens einen nach radial außen ragenden Befestigungsvorsprung (35) aufweisen und radial federelastisch verformbar sind, so dass der Abstreifring (7) durch in Montagerichtung (34) erfolgendes Eindrücken in die Durchbrechung (3) im Rahmen einer Rastverbindung an der Halterung (1) festlegbar ist, wobei die Befestigungsvorsprünge (35) der Befestigungsarme (33) in die Ringnut (27) einrasten, **dadurch gekennzeichnet, dass** der Abstreifring (7) eine nach Art eines Bundes radial nach außen vorspringende ringförmige Blende (16) aufweist, die in Gebrauchsstellung des Abstreifringes (7) außerhalb der Durchbrechung (3) an einer sich an diese anschließenden Stirnfläche (28) der Halterung (1) anliegt.

2. Abstreifvorrichtung nach Anspruch 1, **dadurch gekennzeichnet, dass** die Tragpartie (16) in der Gebrauchsstellung des Abstreifringes (7) außerhalb der Durchbrechung (3) liegt.

3. Abstreifvorrichtung nach Anspruch 1 oder 2, **dadurch gekennzeichnet, dass** die Blende von der Tragpartie (16) gebildet ist.

4. Abstreifvorrichtung nach einem der Ansprüche 1 bis 3, **dadurch gekennzeichnet, dass** die Abstreiflippe (23) von der Tragpartie (16) getragen ist.

5. Abstreifvorrichtung nach einem der Ansprüche 1 bis 4, **dadurch gekennzeichnet, dass** die insgesamt eine ringähnliche Anordnung bildenden Befestigungsarme (33) die Abstreiflippe (23) radial außen konzentrisch umschließen.

6. Abstreifvorrichtung nach einem der Ansprüche 1 bis 5, **dadurch gekennzeichnet, dass** der Abstreifring (7) aus Kunststoffmaterial besteht.

7. Abstreifvorrichtung nach Anspruch 6, **dadurch gekennzeichnet, dass** der Abstreifring als einstückiger Mehrstoffkörper ausgeführt ist.

8. Abstreifvorrichtung nach einem der Ansprüche 1 bis 7, **dadurch gekennzeichnet, dass** in Gebrauchsstellung gesehen im Innern der Durchbrechung ein Dichtring (12) angeordnet ist, der von dem Abstreifring (7) axial fixiert ist.

## Claims

1. Wiping device with a single-piece wiper ring (7) which is located in its position of use by way of a mounting device (19) in an annular groove (27) provided within an opening (3) of a mounting (1) and open radially inwards, and which encircles, by means of a wiper lip (23), with contact a rod-shaped component (4) axially movable in relation to itself and to the mounting and passing through the opening (3), whereby the mounting (19) incorporates a plurality of mounting arms (33) distributed in the circumferential direction (32) of the wiper ring (7) and axially projecting in a mounting direction (34) from an annular support section (16) of the wiper ring (7), each of them having at least one mounting projection (35) projecting radially outwards and each of them being spring-elastically deformable in the radial direction, so that the wiper ring (7) can be located on the mounting (1) while forming a snap-in connection by being pressed into the opening (3) in the mounting direction (34), whereby the mounting projections (35) of the mounting arms (33) snap into position in the annular groove (27), **characterised in that** the wiper ring (7) incorporates an annular surround (16) projecting radially outwards in the manner of a collar and lying against an end face (28) of the mounting (1) outside the opening (3) in the position of use of the wiper ring (7).

2. Wiping device according to claim 1, **characterised in that** the support section (16) lies outside the opening (3) in the position of use of the wiper ring (7).

3. Wiping device according to claim 1 or 2, **characterised in that** the surround is represented by the support section (16).

4. Wiping device according to any of claims 1 to 3, **characterised in that** the wiper lip (23) is supported by the support section (16).

5. Wiping device according to any of claims 1 to 4, **characterised in that** the mounting arms (33), which together form a ring-like arrangement, radially and concentrically encircle the wiper lip (23) on the outside.

6. Wiping device according to any of claims 1 to 5, **characterised in that** the wiper ring (7) is made of a plastic material.

7. Wiping device according to claim 6, **characterised in that** the wiper ring is designed as a single-piece compound body.

8. Wiping device according to any of claims 1 to 7, **characterised in that**, viewed in the position of use, a sealing ring (12) axially located by the wiper ring (7) is arranged within the opening.

## Revendications

1. Dispositif racleur, avec une bague racleuse (7) d'un seul tenant qui, dans sa position de service, est immobilisée avec un dispositif de fixation (19) prévu sur elle dans une rainure annulaire (27) ouverte radialement vers l'intérieur et prévue à l'intérieur d'une traversée (3) d'un support (1), et enserre ce faisant avec contact une pièce (4) en forme de tige mobile axialement par rapport à elle et au support, traversant la traversée (3) et munie d'une lèvre de raclage (23), le dispositif de fixation (19) comprenant une pluralité de bras de fixation (33) répartis dans la direction circonférentielle (32) de la bague racleuse (7) et partant axialement dans une direction de montage (34) depuis une partie porteuse annulaire (16) de la bague racleuse (7), bras qui présentent au moins une saillie de fixation (35) dépassant radialement vers l'extérieur et qui sont déformables élastiquement dans le sens radial, de sorte que, par un enfoncement dans la traversée (3) dans la direction de montage (34), la bague racleuse (7) peut être immobilisée sur le support (1) dans le cadre d'une liaison encliquetée, les saillies de fixation (35) des bras de fixation (33) s'enclenchant dans la rainure annulaire (7), **caractérisé en ce que** la bague racleuse (7) présente un écran (16) annulaire dépassant radialement vers l'extérieur à la manière d'une collerette, écran qui, dans la position de service de la bague racleuse (1) en dehors de la traversée (3), s'appuie contre une surface frontale (28) du support (1) faisant suite à celle-ci.

2. Dispositif racleur selon la revendication 1, **caractérisé en ce que** la partie porteuse (16) se trouve en dehors de la traversée (3) dans la position de service de la bague racleuse (7).

3. Dispositif racleur selon la revendication 1 ou 2, **caractérisé en ce que** l'écran est formé par la partie porteuse (16).

4. Dispositif racleur selon l'une des revendications 1 à 3, **caractérisé en ce que** la lèvre de raclage (23) est portée par la partie porteuse (16).

5. Dispositif racleur selon l'une des revendications 1 à 4, **caractérisé en ce que** les bras de fixation (33) formant globalement un agencement de type bague entourent la lèvre de raclage (23) de façon concentrique, à l'extérieur, radialement.

6. Dispositif racleur selon l'une des revendications 1 à 5, **caractérisé en ce que** la bague de raclage (7) est constituée d'un matériau synthétique.

7. Dispositif racleur selon la revendication 6, **caractérisé en ce que** la bague de raclage est réalisée sous la forme d'un corps d'un seul tenant en plusieurs matières.

8. Dispositif racleur selon l'une des revendications 1 à 7, **caractérisé en ce que**, dans la position de service, une bague d'étanchéité (12) est placée à l'intérieur de la traversée, bague qui est immobilisée axialement par la bague racleuse (7).
